# EUROPEAN PATENT APPLICATION

(11) **EP 2 238 959 A1**
(43) Date of publication of application: **13.10.2010**
(21) Application number: 10003709.2
(22) Date of filing: 06.04.2010
(51) Int. Cl.: A61G 3/08, B60N 2/24

(54) **Wheelchair anchoring system**

(30) Priority: 07.04.2009 NL 1036830
(71) Applicant: VDL Bus & Coach, 5555 XP Valkenswaard (NL)
(72) Inventor: Helmes, Franciscus Wilhelmus Marie, 5935 VM Steijl (NL)
(74) Representative: Valkonet, Rutger

(57) **Abstract**

A seating device for a vehicle for transporting wheelchairs, comprising a frame which comprises a mounting part for connecting the seating device to an inner side wall of the vehicle and a support part connected to the underside of the mounting part, and a seat portion and a backrest connected to the frame, wherein said support part is provided with at least one securing element for securing a wheelchair between the seating device and another seating device

## Description

The invention relates to a seating device for a vehicle for transporting wheelchairs, to a wheelchair anchoring system and to a vehicle provided with a wheelchair anchoring system.

When transporting disabled persons in vehicles intended for that purpose, such as buses, it may be advantageous to transport said persons on passenger seats as well as in one or more wheelchairs. The passenger seats and the wheelchairs can be placed in different parts of the passenger space. Alternatively, wheelchairs can be placed between passenger seats, in which case a space is cleared between the passenger seats, seen in the driving direction, for placing a wheelchair. By designing parts of the passenger seat, such as the seat portion and/or the backrest, to be capable of being swung up, whether or not in combination with designing the same to be pivotable, additional space can be created for facilitating the transportation and handling of wheelchairs. Moreover, the passenger seats may be slidably mounted in the vehicle, so that a higher degree of flexibility is obtained as regards the lay-out of the vehicle. As a result, it will be easier to use a combination of fixed seats and wheelchair spaces.

An example of this is to be found in European patent application EP 1 777 100 A1, in which seating devices are mounted to a side wall of a vehicle, whilst parts of said seating device, for example the backrest, can be pivoted towards the side wall and the seating device as a whole is movable along the side wall via a rail system. Wheelchair users are in this case secured by means of three-point seat belts attached to the seating device. It is furthermore known in current transportation systems to secure wheelchairs to the floor of the vehicle by means of belts or straps so as to prevent said wheelchairs from becoming displaced while driving.

A drawback of the above-described manner of securing wheelchairs is that holes or slots need to be provided in the floor of the vehicle, in which hooks attached to the straps engage for fixation to the floor. Said holes or slots and belts or straps can become soiled and damaged, making it more difficult to engage the hooks and interfering with the correct functioning of the system, so that safety is no longer guaranteed. Furthermore, as a result of the use of loose straps, said straps will more easily get misplaced after use. It is difficult to remove the straps from the slots or the holes and to put them away when they are not being used. Accordingly it is an object of the present invention to provide a safe manner of anchoring wheelchairs for use in wheelchair transportation, which obviates the need for holes and slots in the floor of the vehicle.

According to a first aspect of the invention, this object is accomplished in a seating device for a vehicle, comprising a frame which comprises a mounting part for connecting the seating device to an inner side wall of the vehicle and a support part connected to the underside of the mounting part, and a seat portion and a backrest connected to the frame, which support part is provided with at least one securing element for anchoring a wheelchair between the seating device and another seating device. Since the securing elements are provided on the support part of the seating device, it is no longer necessary to fix said securing element to the floor of the vehicle.

In one embodiment of the invention, the support part has a front face and a rear face, seen from the driving direction of the vehicle, the seat portion being connected to the support part and the securing elements comprising at least a belt or a cable provided with a fastening hook at one end for connecting the belt or the cable to the wheelchair, which belt or cable is at the other end connected to a tensioner attached to one of the sides of the support part, said tensioner being designed for accommodating the belt or the cable in rolled-up condition. By providing the support part with securing means in this way it is possible to anchor a wheelchair placed between two seating devices as described above in place and to simply put the securing elements away when they are not being used by housing them in the tensioner.

In another embodiment of the invention, in which the tensioner of the securing element is connected to the wheelchair side of the support part and the belt or the cable can be unrolled substantially in upward direction and be connected to the wheelchair, it is possible to exert a vertical force in the direction of the floor on the wheelchair, so that the wheelchair is securely anchored to the floor of the vehicle. A horizontal component of the direction in which the belt or the cable is connected to the wheelchair anchors the wheelchair in horizontal direction, i.e. the driving direction.

In an alternative embodiment, the support part has a projection extending towards the floor. The tensioner is in that case mounted to the support part on the side remote from the wheelchair, such that the securing element can be extended over the projection substantially in downward direction and be guided in upward direction to be connected to the wheelchair. This has the advantage that the pulling force exerted on the securing elements can be taken up in part via the projection, thereby relieving the load on the tensioner.

In another embodiment of the invention, the support part is provided with a suspension element on the side opposite the tensioner, to which the securing element can be detachably connected. This has the advantage that the securing element can be stored in a secured manner, without the ends thereof lying about in the vehicle.

In another embodiment of the invention, the inner side wall of the vehicle is provided with a rail system, to which the frame is connected, using connecting means, in such a manner that the frame can be connected to the rail system at a random location. This achieves that a seating device according to the invention can be easily moved along the inner side wall of the vehicle, thus making it easier to place a wheelchair. A seating device could be moved in rearward direction, for example, so as to make space for rolling a wheelchair into the vehicle, and be moved in forward direction again after placement of the wheelchair. The wheelchair can subsequently be anchored in place by means of the securing elements.

In another embodiment of the invention, the frame is provided with a safety belt. Said belt may be a three-point belt. This makes it possible to secure a wheelchair user, because of the safety belt must be connected to the vehicle itself rather than to the wheelchair. The safety belt thus connected to the frame also contributes towards anchoring and securing the wheelchair as a whole in case of a possible calamity.

In another embodiment of the invention, the seat portion and the backrest can be swung up to a vertical position. Whilst the seating device is suitable for providing seating to a passenger with the seat portion and the backrest in the swung-down position, it provides more space for placing a wheelchair with the seat portion and the backrest in the swung-up position. In the swung-up position, the backrest can furthermore provide additional support for the wheelchair user seated in the wheelchair.

In one embodiment, the backrest may be provided with a tiltable headrest. When the seating device according to the invention is not in use, the headrest can be tilted downwards, so that the view of a passenger seated behind the seating device, seen in the driving direction, is no longer obstructed. Furthermore, a driver of the vehicle can have a better view in rearward direction when no passengers are present in the vehicle. The headrest can also be tilted to a horizontal position, so that the headrest can also be of service to a wheelchair user who is a little further removed from the seating device than a passenger not seated in a wheelchair who makes use of the seating device.

In another embodiment of the invention, the frame comprises a vertical shaft, about which the seat portion and the backrest, in the swung-up position thereof, and the support part can be pivoted to a position facing the inner side wall. This provides an additional possibility for making space for placing a wheelchair between two seating devices according to the invention, in which case one of the seating devices can be swung aside, whereupon the wheelchair is placed, the swung-aside seating device can be swung back and subsequently be anchored, using the securing means.

In another embodiment of the invention, the surface of the support part that faces the inner side wall is provided with a recess, so that a projecting part of the inner side wall can fall into said recess in the position in which the support part is turned towards the inner wall. A projecting part of the inner side wall can be a wheel housing, for example, or part of a spare wheel or a heating duct.

According to a second aspect of the invention, the object of the invention is also accomplished in a wheelchair anchoring system for a vehicle comprising at least two seating devices as described in the foregoing, which are spaced so far apart along an inner side wall of the vehicle that a wheelchair can be placed between the two seating devices.

According to a third aspect of the invention, said object is also accomplished in a vehicle provided with a wheelchair anchoring system as described in the foregoing.

The invention will now be explained in more detail on the basis of the embodiments shown in the appended figures.

Figure 1a shows a seating device according to a preferred embodiment of the invention in swung-down position.

Figure 1b shows a seating device according to an embodiment of the invention in swung-up position.

Figure 1c shows a seating device according to an embodiment of the invention in swung-up position, with the headrest tilted downward.

Figure 2 is a spatial view of a wheelchair anchoring system according to an embodiment of the invention.

Figure 3 is a side view of a wheelchair anchoring system according to an embodiment of the invention.

Figure 4 is a cross-sectional view of an inner side wall of a vehicle comprising a rail system with a seating device according to the invention connected thereto.

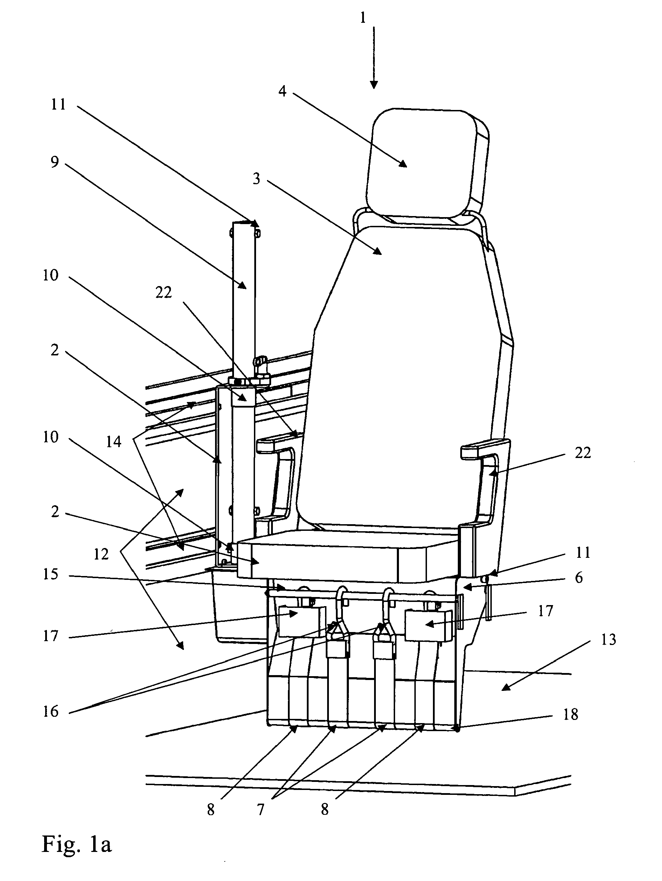

Figure 1a shows a seating device according to a preferred embodiment of the invention, comprising a frame built up of a mounting plate 2 and a support part 6. The mounting plate 2 makes it possible to connect the seating device 1 to the inner side wall of a vehicle. A backrest 3 and a seat portion 5 are connected to the frame 2, 6. Both the backrest 3 and the seat portion 5 are preferably connected to the support part 6, for example by means of armrests 22. Said connection may be such that the backrest 3 and the seat portion 5 can be swung up. In the swung-down position, as shown in figure 1a, the seating device 1a can be used as a passenger seat. The support part 6 is provided with belts 7, 8, which are provided at the rear side and the front side, respectively, of the support part 6, using a tensioner 17. A headrest 4 is connected to the backrest 3, such that the headrest can be tilted to various positions in the driving direction. In the downwardly tilted position, the headrest 4 extends downwards. In a position tilted in the driving direction, the headrest 4 extends forward in the driving direction, in which position it can be used as a headrest by a wheelchair user, if desired.

The tensioners 17 are constructed to accommodate the belts 7, 8 in fully or partially rolled-up condition. A hook 16 is connected to the free ends of the belts 7, 8, which hook can be hooked to a wheelchair in use, whilst the hook 16 can be connected to a suspension element 27 when not in use. The tensioners 17 may also be provided with a locking mechanism, so that in extended condition, in which the hooks 16 are attached to a wheelchair, the belts 7, 8 cannot be pulled further out of the tensioners 17 upon acceleration. The tensioners 17 may alternatively be provided with manual locking, The suspension element 27 may be a rod attached to the support part 6, for example, as shown in figure 1a. A suspension element may be provided on both sides of the supporting member 6. Instead of using belts it is possible to use cables or chains or the like in combination with tensioners adapted for that purpose.

In one embodiment (not shown), the tensioners 17 may be mounted to the support part 6 with a belt outlet opening facing upwards, such that the belts 7, 8 can be pulled in upward direction out of the tensioner 17 before the hook 16 is attached to a wheelchair. In the preferred embodiment shown in figure 1a, the tensioner 17 is mounted to the support part 16 with the outlet opening facing downwards, in which position the belts 7, 8 can be passed over the projection 18 of the support part 6 and subsequently be pulled up on the other side of the support part 6 before being attached to a wheelchair or to the suspension member 27 by means of the hook 16. In this way part of the pulling force required for holding a wheelchair in place is taken up by the projection 18 of the support part 6.

In another preferred embodiment of the seating device 1, a pivot shaft 9 is mounted in the frame 2, 6, enabling the support part 6 with the seat portion 5 and the backrest 3 to pivot in horizontal direction about said pivot shaft. Pivoting is made possible in that bearings 10 are provided at the upper side and the bottom side of the mounting plate 2, in which bearings the pivot shaft 9 is mounted. The support part 6 with the seat portion 5 and the backrest 3 in the swung-up position can pivot to the rear, seen in the driving direction, so that the seating device 1 can be pivoted into contact with the inner side wall 12 of the vehicle. This makes it possible to clear the floor 13 of the vehicle for manoeuvring wheelchairs. The phrase "driving direction" as used herein is understood to be the direction in which the seat portion faces in swung-down position.

The seating device 1 may also be provided with a seat belt (not shown), for example a three-point seat belt, attached to points of attachment 11 on the frame 2, 6.

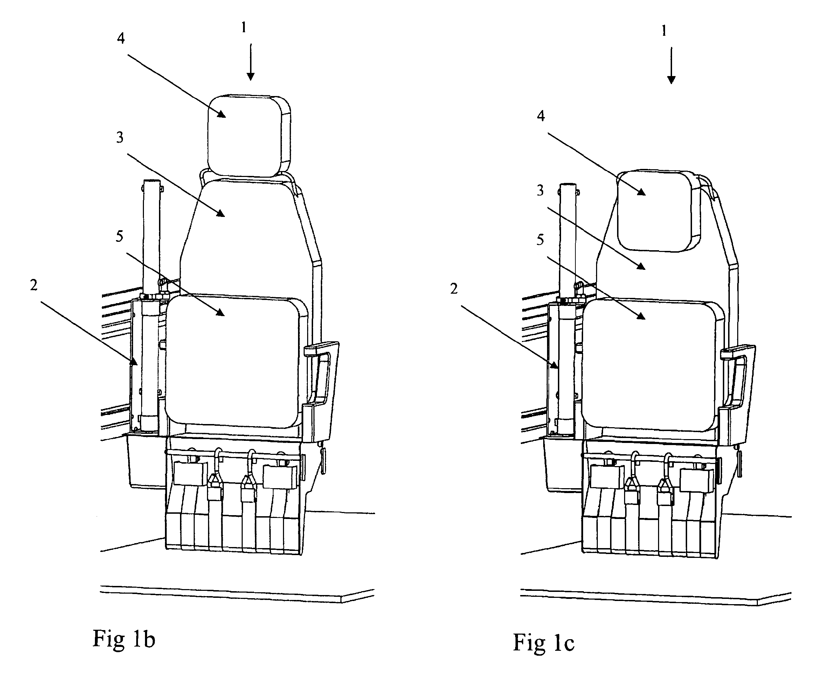

Figure 1b shows an embodiment of the seating device according to the invention with the seat portion 5 and the backrest 3 in swung-up position. In this position the seating device 1 can be used for placing a wheelchair in front thereof (seen in the driving direction), in which position the wheelchair user can use the backrest 3 and the headrest 4 for additional support, if necessary.

Figure 1c shows the seating device 1 according to another embodiment of the invention, in which the headrest 4 is tilted downwards. This enables a passenger or a wheelchair user seated behind the seating device (seen in the driving direction) to look over the seating device, or prevents the headrest 4 from possibly blocking the view of a driver of the vehicle in which the seating device is placed.

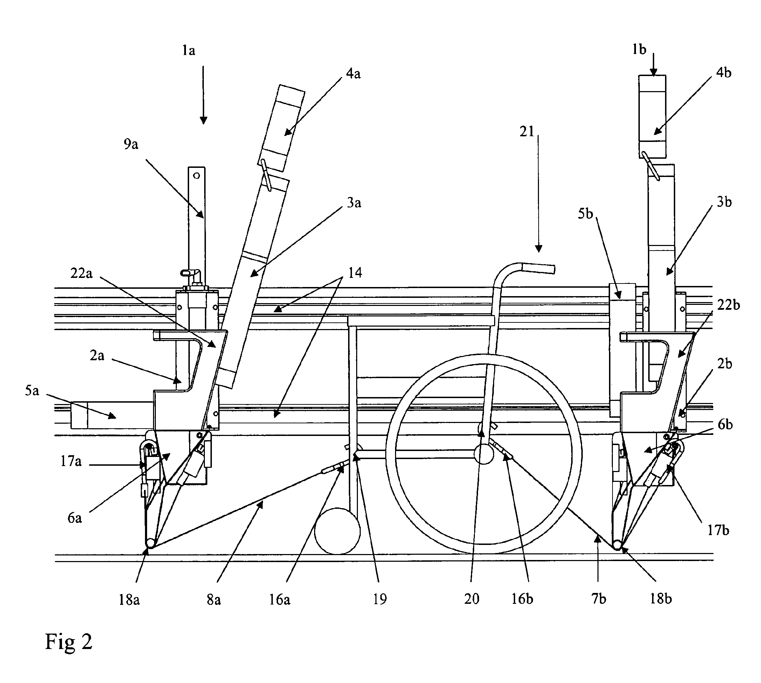

Figure 2 shows a wheelchair anchoring system according to an embodiment of the invention. The wheelchair anchoring system as shown comprises two seating devices 1 a, 1 b as described above. The seating device 1 a is shown with the seat portion 5a and the backrest 3a in swung-down position, whilst the seating device 1b is shown with the seat portion 5b and the backrest 3b in swung-up position. In this way the seating device 1a, connected to the support part 6a by means of the armrest 22a, can be used as a passenger seat, and the seating device 1b can be used as a partition or as a support for a user of the wheelchair 21. The wheelchair 21 is not further elaborated herein.

The wheelchair 21 is anchored by means of belts 8a, 7b, which are attached to respective support parts 6a, 6b by means of tensioners 17a, 17b, with the tensioner 17a being attached to the front side of the support part 6a (seen in the driving direction) and the belt 8a being passed over the projection 18a of the support part 6a, extending towards to the point of attachment 19 of the wheelchair 21, being attached thereto by means of the hook 16. The wheelchair 21 is further provided with a frame 15 and a wheel 16. The wheelchair 21 is further anchored by means of the belt 7b, which is attached to the support part 6b by means of the tensioner 17b, with the belt being passed over the projection 18b of the support part 6b and being attached to the point of attachment 20 of the wheelchair 21 by means of the hook 16. The points of attachment 19 and 20 may be hooks or eyes suitable for receiving a hook 16. The hook connection by means of hooks 16a, 16b is merely an example of a possible connection; many variants for connecting the wheelchair 21 to a belt 7, 8 are possible.

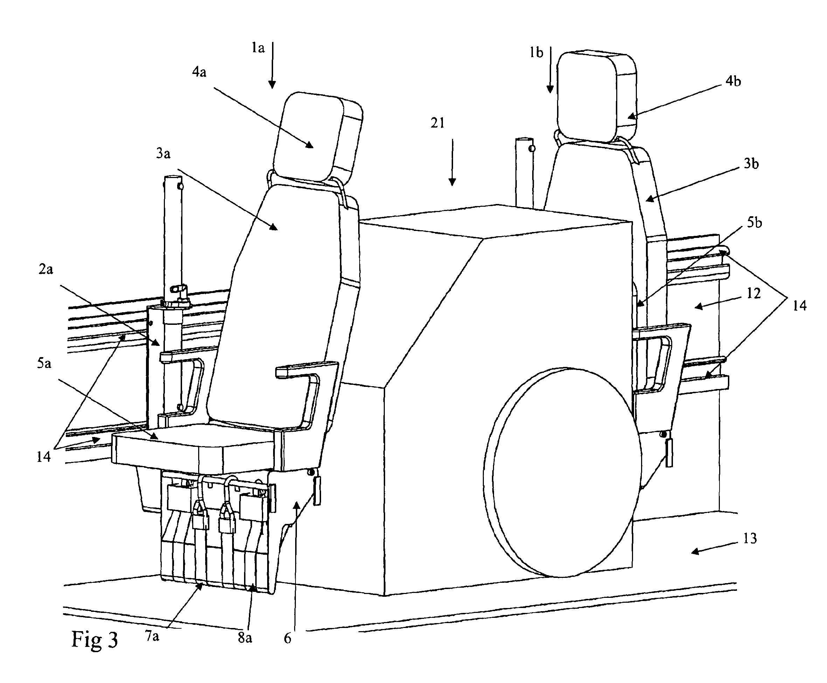

Figure 3 shows a wheelchair anchoring system according to a preferred embodiment of the invention in a vehicle provided with a rail system 14, comprising a seating device 1 a with a seat portion 5a and a backrest 3a in swung-down position, which is suitable for use as a passenger seat and which is connected to the rail system 14 by means of the mounting element 2a. The wheelchair anchoring system further comprises a seating device 1 b with a seat portion 5b and a backrest 3b and a headrest 4b in swung-up position. The seating device 1 b is further identical to the seating device 1 a.

The wheelchair 21 can be placed between the seating device 1 a and the seating device 1b and be anchored in the manner indicated in figure 2. In figure 3 the wheelchair 21 is schematically shown in detached, non-anchored condition.

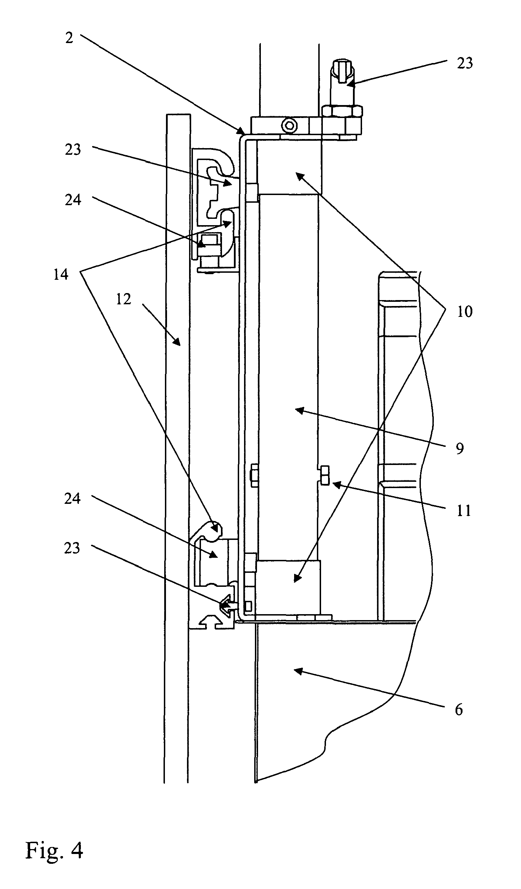

Figure 4 is a detail cross-sectional view of the side wall 12 and the rail system 14, in which the mounting plate 2 is provided with bearings 24 for moving the mounting plate 2 in the longitudinal direction of the rail system. Furthermore, break-out preventing elements 23 are provided, which prevent the mounting plate 2 from becoming detached from the rail system 14 in case of an accident. Furthermore, a locking mechanism 25 is provided between the mounting plate 2 and the pivot shaft 9 for retaining the frame 2, 9, 6 in an angular position relative to the inner side wall 12 of the vehicle. When the locking mechanism is released, the seating device as shown in one of the preceding figures can be pivoted so that the backrest 3 and the support part 6 face toward or abut against the inner side wall 12. The locking mechanism 25 can in that case also ensure that said position is retained. The locking mechanism 25 will not be elaborated herein, the skilled person will know how such a mechanism can be realised.

The embodiments shown and discussed herein are merely intended as examples of the implementation of the present invention. Differences, variations and modifications are possible without departing from the inventive concept as defined in the claims below.

## Claims

1. A seating device (1) for a vehicle for transporting wheelchairs, whose frame (2, 6) comprises
- a mounting part (2) for connecting the seating device (1a) to an inner side wall (12) of the vehicle and a support part (6) connected to the underside of the mounting part (2),
- a seat portion (5) and a backrest (3) connected to the frame (2, 6);
**characterised in that** said support part (6) is provided with at least one securing element (7, 8) for securing a wheelchair between the seating device (1a) and another seating device (1 b), and
- wherein the support part (6) has a front face and a rear face, seen from the driving direction of the vehicle, the seat portion (5) being connected to the support part (6) and the securing element (7, 8) comprising at least one of a belt or a cable, the free end of the securing element being provided with a fastening hook (19, 16) for connecting the belt or the cable to the wheelchair (21), which belt or cable is at the other end connected to a tensioner (17) attached to one of the sides of the support part (6), said tensioner (17) being designed for accommodating the belt or the cable in rolled-up condition.

2. The seating device (1) according to claim 1, wherein the tensioner (17) of the securing element (7, 8) is connected to the wheelchair side and the securing element (7, 8) can be unrolled substantially in upward direction and be connected to the wheelchair.

3. The seating device (1) according to claim 1, wherein the support part (6) is provided with a projection (18) extending towards the floor, wherein the tensioner (17) is mounted to the support part (6) on the side remote from the wheelchair (21), such that the securing element (7, 8) can be extended over the projection (18) substantially in downward direction and be guided in upward direction to be connected to the wheelchair (21).

4. The seating device (1) according to claim 3, wherein the support part (6) is provided with a suspension element (15) on the side opposite the tensioner, to which the securing element (7, 8) can be detachably connected when not in use.

5. The seating device (1) according to any one of the preceding claims, wherein the inner side wall (12) of the vehicle is provided with a horizontal rail system (14), to which the frame (2, 6) is connected, using connecting means (23, 24), in such a manner that the frame (2, 6) can be connected to the rail system (14) at a random location.

6. The seating device (1) according to any one of the preceding claims, wherein the frame (2, 6) is provided with a safety belt.

7. The seating device (1) according to any one of the preceding claims, wherein the seat portion (5) and the backrest (3) can be swung up to a vertical position.

8. The seating device (1) according to any one of the preceding claims, wherein the backrest (3) is provided with a tiltable headrest (4).

9. The seating device (1) according to any one of the preceding claims, wherein the frame (2, 6) comprises a vertical shaft (9), about which the seat portion (5) and the backrest (3), in the swung-up position thereof, and the support part (6) can be pivoted to a position facing the inner side wall.

10. The seating device (1) according to any one of the preceding claims, wherein the surface of the support part (6) that faces the inner side wall is provided with a recess, so that a projecting part of the inner side wall can fall into said recess in the position in which the support part (6) is turned towards the inner side wall.

11. A wheelchair anchoring system for a vehicle, comprising at least two seating devices (1 a, 1 b) according to any one of claims 1-10, which are spaced so far apart along an inner side wall (12) of the vehicle that a wheelchair (21) can be placed between the two seating devices (1 a, 1 b).

12. A vehicle provided with a wheelchair anchoring system according to claim 11.
